# EUROPÄISCHE PATENTSCHRIFT

(11) **EP 1 646 474 B1**
(45) Veröffentlichungstag und Bekanntmachung des Hinweises auf die Patenterteilung: **02.10.2013**
(21) Anmeldenummer: 04741165.7
(22) Anmeldetag: 20.07.2004
(51) Int. Cl.: B23K 26/06

(54) **VERFAHREN ZUR MATERIALBEARBEITUNG MIT LASERIMPULSEN GROSSER SPEKTRALER BANDBREITE UND VORRICHTUNG ZUR DURCHF HRUNG DES VERFAH RENS**
METHOD FOR PROCESSING MATERIALS WITH LASER PULSES HAVING A LARGE SPECTRAL BANDWIDTH AND DEVICE FOR CARRYING OUT SAID METHOD
PROCEDE DE TRAITEMENT DE MATERIAUX AU MOYEN D'IMPULSIONS LASER DE GRANDE LARGEUR DE BANDE SPECTRALE ET DISPOSITIF PERMETTANT DE METTRE EN OEUVRE CE PROCEDE

(30) Priorität: 22.07.2003 DE 10333770
(43) Veröffentlichungstag der Anmeldung: 19.04.2006
(73) Patentinhaber: Carl Zeiss Meditec AG, 07745 Jena (DE)
(72) Erfinder: BISCHOFF, Mark, 07749 Jena (DE); HACKER, Martin, 07745 Jena (DE); SAUERBREY, Roland, 01187 Dresden (DE); STOBRAWA, Gregor, 07743 Jena (DE); ZIEGLER, Wolfgang, 07745 Jena (DE)
(86) Internationale Anmeldenummer: PCT/EP2004/008090
(87) Internationale Veröffentlichungsnummer: WO 2005/009666

(56) Entgegenhaltungen:
- WO-A-02/28305
- DE-A- 10 006 081
- DE-A- 10 203 198
- US-A- 4 399 345
- US-A- 4 494 226
- US-A- 4 655 547
- US-A- 5 569 398
- US-A- 5 948 214
- US-A- 6 150 630
- US-B1- 6 281 471
- US-B1- 6 329 270
- STOIAN, R. ET AL.: "Ultrafast Laser material processing using dynamic temporal pulse shaping" RIKEN REVIEW, Nr. 50, Januar 2003 (2003-01), Seiten 71-76, XP008038971 in der Anmeldung erwähnt
- HACKER M ET AL: "MICROMIRROR SLM FOR FEMTOSECOND PULSE SHAPING IN THE ULTRAVIOLET" APPLIED PHYSICS. B, LASERS AND OPTICS, SPRINGER, BERLIN,, DE, Bd. B76, 2003, Seiten 711-714, XP008035863 ISSN: 0946-2171 in der Anmeldung erwähnt
- BRIXNER T ET AL: "FEMTOSECOND POLARIZATION PULSE SHAPING" OPTICS LETTERS, OPTICAL SOCIETY OF AMERICA, WASHINGTON, US, Bd. 26, Nr. 8, 15. April 2001 (2001-04-15), Seiten 557-559, XP008035861 ISSN: 0146-9592 in der Anmeldung erwähnt
- STOIAN R ET AL: "Laser ablation of dielectrics with temporally shaped femtosecond pulses" APPLIED PHYSICS LETTERS, AMERICAN INSTITUTE OF PHYSICS. NEW YORK, US, Bd. 80, Nr. 3, 21. Januar 2002 (2002-01-21), Seiten 353-355, XP012031308 ISSN: 0003-6951 in der Anmeldung erwähnt
- KORTE F ET AL: "SUB-DIFFRACTION LIMITED STRUCTURING OF SOLID TARGETS WITH FEMTOSECOND LASER PULSES" OPTICS EXPRESS, OPTICAL SOCIETY OF AMERICA, WASHINGTON, DC,, US, Bd. 7, Nr. 2, 17. Juli 2000 (2000-07-17), Seiten 41-49, XP008035860 ISSN: 1094-4087 in der Anmeldung erwähnt

## Beschreibung

Die Erfindung betrifft ein Verfahren zur Materialbearbeitung mit Laserimpulsen großer spektraler Bandbreite, insbesondere mit Femtosekunden- und Pikosekundenimpulse gemäß dem Oberbegriff des Anspruchs 1 sowie eine Vorrichtung zur Durchführung des Verfahrens. Die WO-02/28305 A offenbart ein solches Verfahren und eine solche Vorrichtung.

Es ist eine Vielzahl von Verfahren bekannt, welche die Wechselwirkung elektromagnetischer Strahlung im infraroten, sichtbaren und ultravioletten Spektralbereich mit Materie zum Schmelzen, Verdampfen, Abtragen (Ablation) von Werkstoff US 4,494,226, zur Induzierung von Phasenübergängen US 6,329,270 oder zur Änderung anderer physikalischer oder chemischer Materialeigenschaften nutzen.

Wird das Wechselwirkungsgebiet von Laserlicht und Werkstück, beispielsweise durch optische Masken oder sukzessive Verschiebung des Laserfokus, auf der Oberfläche des Werkstücks räumlich geformt, so gelingt es, bei der Bearbeitung linien- und flächenhafte Strukturen zu erzeugen; und auch dreidimensionale Strukturen können durch schichtweise Abtragung sowie in transparenten Medien auch durch die Positionierung des Laserfokus in der Tiefe des Materials erzielt werden (DE 100 06 081 A1).

Für viele dieser Verfahren bedarf es hoher Leistungsdichten, die insbesondere durch Anwendung gepulster Laserstrahlungsquellen erreicht werden können. Bei der Verwendung von Laserimpulsen kurzer Dauer (einige Nanosekunden) wird eine besonders effiziente Bearbeitung erzielt (US 6,281,471). Störende, durch thermische Effekte verursachte Veränderungen des Werkstücks außerhalb der Wechselwirkungszone können bei noch kürzerer Impulsdauer weiter verringert werden (US 6,150,630). Dadurch ist es möglich, beispielsweise mittels Ablation, sehr feine Strukturen zu erzeugen, bei denen die Größe der Materialgebiete, in denen eine Wechselwirkung mit der Strahlung erfolgt, und jene, die keine wesentliche Veränderung gegenüber ihrem Ausgangszustand erfahren, nur durch die Größe des Laserfokus gegeben ist. Die theoretische Grenze für die minimalen Strukturgrößen ist dann durch die Beugungsbegrenzung und somit letztlich durch die Wellenlänge der verwendeten Laserstrahlung bestimmt. Insbesondere die Verwendung von Laserimpulsen mit Impulsdauern im Bereich von etwa 20 fs bis 1000 ps ermöglicht die direkte Mikro-Materialbearbeitung (F. Korte et. al.: "Sub-diffraction limited structuring of solid targets with femtosecond laser pulses", Optics Express 7, 2000, 41), die neben technischen Anwendungen auch medizinische Anwendungen, insbesondere in der Mikrochirurgie, einschließt. Darüber hinaus finden Vorrichtungen zur Erzeugung spektral breitbandiger Laserimpulse als Ultrakurzpulslaser breite Anwendung in der Forschung.

In zwei experimentelle Arbeiten von Stoian et al. (R. Stoian et al. : "Laser ablation of dielectrics with temporally shaped femtosecond pulses", Appl. Phys. Lett. 80, 2002, 353; R. Stoian et al.: "Ultrafast laser material processing using dynamic temporal pulse shaping", RIKEN Review 50, 2003) wurde offenbart, wie mittels zeitlich geformter Laserimpulse der Strukturierungsprozess bei der Laserablation hinsichtlich der Reduktion des Restschadens optimiert werden kann. Zu diesem Zweck wurden mittels Phasenmodulation verschiedene Impulszüge erzeugt und die Vorteilhaftigkeit ihrer Verwendung gegenüber ungeformten Laserimpulsen des verwendeten Lasersystems beim ablativen Laserbohren ausgewählter Materialien unter Vakuumbedingungen experimentell nachgewiesen. Dazu wurden zum Vergleich ungeformte und geformte Laserimpulse jeweils auf die Oberfläche von a-SiO₂ und Al₂O₃ gerichtet und das Bearbeitungsergebnis anschließend mit Hilfe eines Lichtmikroskops visuell analysiert.

Bei der Lasermaterialbearbeitung von Verbundwerkstoffen besteht die Möglichkeit, das Amplitudenspektrum der verwendeten Laserimpulse so zu wählen, dass eine materialselektive Bearbeitung möglich ist. Die Auswahl eines geeigneten Lasers unter dem Gesichtspunkt einer Anpassung der Laserwellenlänge an das zu bearbeitende Material ist eine bekannte Methode (beispielsweise US 5,948,214, US 4,399,345 und US 5,569,398). Allerdings können sich die physikalisch-technischen Eigenschaften des Bearbeitungsobjektes im Bearbeitungsvorgang, beispielsweise durch Materialerwärmung, ändern. Insbesondere Veränderungen der Absorptionscharakteristik von Verbundkomponenten schränken dabei die Materialselektivität im Bearbeitungsvorgang ein (US 6,281,471), da eine adäquate Veränderung der Laserwellenlänge bei den zur Materialbearbeitung verwendeten Lasern kaum möglich ist.

Es war deshalb ein Verfahren zu schaffen, mit dem möglichst aufwandgering, flexibel und universell anwendbar Bearbeitungswirkungen ermöglicht werden, die jeweils spezifisch hinsichtlich Bearbeitungsaufgabe und Prozessverlauf festgelegt und angepasst werden können.

Auch wird beispielsweise in WO 2002/28305 eine spezielle Vorrichtung zur Erzeugung von Laserimpulsen unterchiedlicher Länge durch Anlegen unterschiedlicher HF-Signale an den Modenkoppler offenbart.

Erfindungsgemäß werden für den Materialbearbeitungsprozess bzw. währenddessen ein oder mehrere spektrale Parameter der Laserimpulse, d. h. die spektrale Amplitude und/oder die spektrale Phase und/oder die spektrale Polarisation, gezielt verändert, um damit definierte bearbeitungsspezifische Effekte, wie beispielsweise die Erhöhung der Bearbeitungsgeschwindigkeit, die Verbesserung der Materialselektivität, oder die Verbesserung der Oberflächenstrukturierung, zu bewirken. Dabei ist es vorteilhaft, wenn zumindest ein spektraler Parameter in Abhängigkeit einer Messgröße aus dem Bearbeitungsprozess, vorzugsweise in einem Regelkreis, verändert wird. In den Unteransprüchen sind hierzu nähere Spezifikationen beispielhaft angeführt.

Auf diese Weise ist es einerseits möglich, die für den vorgesehenen Bearbeitungsvorgang und den beabsichtigten Effekt dieser Materialbearbeitung bestmögliche Einstellung der spektralen Laserimpuls-Parameter (beispielsweise auf Grund von Testergebnissen oder sonstigen Erfahrungen oder Berechnungen) vorzunehmen. Darüber hinaus können andererseits die besagten spektralen Laserimpuls-Parameter nicht nur definiert vorgewählt, sondern für den Materialbearbeitungsprozess und/oder während dessen Durchführung in Abhängigkeit einer Regelgröße unmittelbar aus dem Bearbeitungsvorgang in Hinsicht auf die beabsichtigte Bearbeitungswirkung verändert und angepasst werden. Insofern kann auch auf die Veränderung physikalisch-technischer Eigenschaften des Bearbeitungsobjektes und der Prozessbedingungen im Bearbeitungsvorgang reagiert werden, um die bezweckte Bearbeitungswirkung zu verbessern oder zumindest nicht zu beeinträchtigen. Beispielsweise kann im Fall von Materialerwärmungen, welche bei der Bearbeitung von Verbundwerkstoffen im Allgemeinen nicht ohne Auswirkung auf die Materialselektivität bleibt, die spektrale Amplitude der Laserimpulse in Abhängigkeit der Wechselwirkung der Laserimpulse mit den Verbundwerkstoffen als Messgröße dynamisch verändert werden. Diese Veränderungen können sowohl kontinuierlich oder in Intervallen unmittelbar im Bearbeitungsvorgang durchgeführt werden (Regelbetrieb), als auch mit Unterbrechung des Bearbeitungsvorganges und Neueinstellung der spektralen Parameter für dessen Weiterführung erfolgen.

Eigene Untersuchungen zur Mikrostrukturierung von optisch anisotropen Werkstoffen zeigen, dass durch eine gezielte Veränderung der Frequenzkomponenten eines spektral breitbandigen Laserimpulses der Wechselwirkungsprozess zwischen dem Laserimpuls und dem Bearbeitungsobjekt gesteuert werden kann. Insbesondere ermöglicht die gleichzeitige Regelung der spektralen Polarisation und der spektralen Phase bei der Bearbeitung anisotroper Werkstoffe die Kontrolle jenes Strukturierungsprozesses, der für die Erzeugung von anisotropen Wellenleiterstrukturen genutzt wird, zumal bekannte experimentelle Ergebnisse (F. Korte et. al.: "Sub-diffraction limited structuring of solid targets with femtosecond laser pulses", Optics Express 7, 2000, 41) belegen, dass sogar bei der Laserbearbeitung optisch isotroper Materialien nicht nur eine lokale Brechzahländerung erfolgt, sondern in der Regel auch eine lokale Anisotropie induziert wird.

Möglichkeiten, die spektralen Parameter von spektral breitbandigen Laserimpulsen an sich zu verändern, sind hinreichend bekannt (US 4,655,547 oder Brixner and Gerber: Optics Letters 26, 2001, 557). Insbesondere Modulatoren auf der Grundlage mikro-elektromechanischer Systeme (MEMS) erscheinen für eine zukünftige industriellen Applikationen als aussichtsreich (Hacker et al.: "Micromirror SLM for femtosecond pulse shaping in the ultraviolet", Appl. Phys. B 76, 2003, 711).

Die Erfindung soll nachstehend anhand zweier in der Zeichnung dargestellter Ausführungsbeispiele näher erläutert werden.

Es zeigen:
- Fig. 1:: Prinzipaufbau einer Vorrichtung zur Materialbearbeitung unter Formung der spektralen Laserimpuls-Parameter
- Fig. 2:: Prinzipaufbau einer Vorrichtung zur laserbasierten Unterbrechung elektrischer Leiterbahnen auf einem Mikrochip unter Veränderüng der spektralen Amplitude der Laserimpulse.

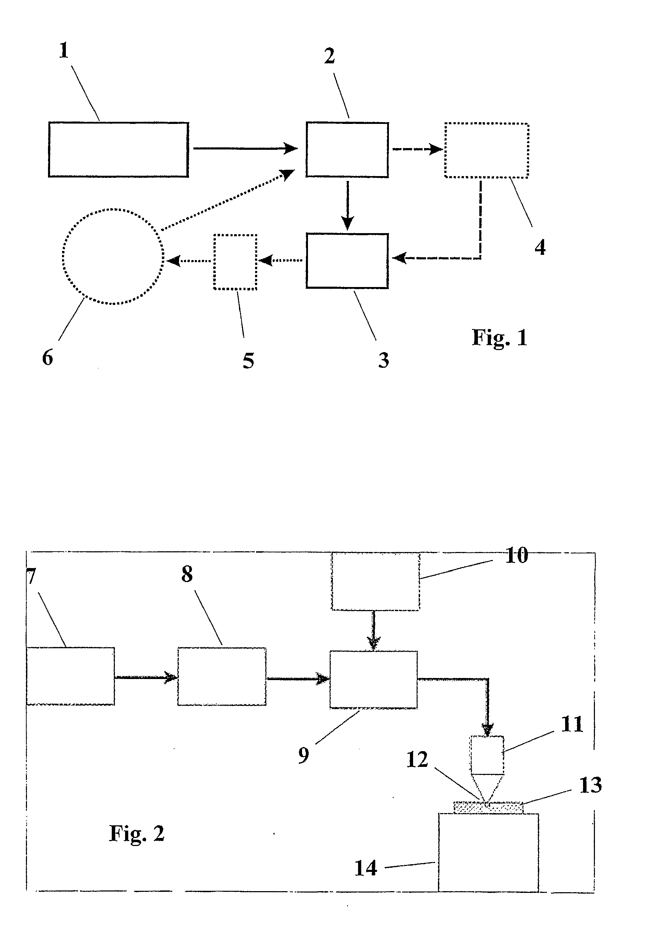

In Fig. 1 ist der Prinzipaufbau einer Vorrichtung zur Materialbearbeitung unter Formung der spektralen Laserimpuls-Parameter dargestellt. Ein Kurzpulslaser 1 als Quelle breitbandiger Laserimpulse 1 steht über einen Impulsformer 2 zur Formung der spektralen Parameter der Laserimpulse mit einer Bearbeitungseinheit 3 zur Materialbearbeitung eines nicht dargestellten Bearbeitungsobjektes in Verbindung. Die Impulse des Kurzpulslasers 1 werden somit in ihrer spektralen Amplitude und/oder der spektralen Phase und/oder der spektralen Polarisation geformt und rufen in der Bearbeitungseinheit 3 bei ihrem Auftreffen auf das Bearbeitungsobjekt eine physikalisch-technische Wechselwirkung mit dessen Material hervor. Dabei können die geformten Laserimpulse (wie gestrichelt dargestellt) ggf. auch über einen optischen Verstärker 4 zur Bearbeitungseinheit 3 gelangen.

Mit Veränderung eines oder mehrerer spektralen Parameter der Laserimpulse durch den Impulsformer 2 kann die Wechselwirkung der Laserimpulse mit dem Material des Bearbeitungsobjektes zum Erreichen definierter bearbeitungsspezifischer Effekte, beispielsweise in Hinsicht auf Bearbeitungsgeschwindigkeit, Materialselektivität oder Oberflächenstrulcturierung, für den Bearbeitungsprozess oder auch im Verlauf desselben beeinflusst werden.

Dabei ist es vorteilhaft, wenn die spektrale Parameteränderung in Abhängigkeit einer als Regelgröße dienenden Messgröße der Materialbearbeitung verändert wird. Zu diesem Zweck ist an die Bearbeitungseinheit 3 mit dem zu bearbeitenden Objekt vorzugsweise eine Messeinrichtung 5 gekoppelt, die über eine Steuereinheit 6 mit dem Impulsformer 2 in Verbindung steht. Die Messeinrichtung 5 misst beispielsweise die Ablationsrate, die Oberflächenrauhigkeit oder die Material- bzw. Umgebungstemperatur des Bearbeitungsobjektes und liefert über die Steuereinheit 6 eine messgrößenabhängige Regelgröße zur Veränderung der spektralen Amplitude und/oder der spektralen Phase und/oder der spektralen Polarisation der Impulse des Kurzpulslasers 1.

In Fig. 2 ist der Prinzipaufbau einer speziellen Vorrichtung zur laserbasierten Unterbrechung elektrischer Leiterbahnen auf einem Mikrochip (link blow) dargestellt. Eine solche Aufgabe zur Materialbearbeitung besteht insbesondere bei Konditionierung von Speicherchips. Dabei kann das erfindungsgemäße Verfahren vorteilhaft eingesetzt werden, um die erzielte Materialselektivität zur Vermeidung von Schäden am Substrat des Mikrochips zu nutzen, welche sonst durch Ungenauigkeit bei der räumlichen Überlagerung des Laserlichts mit den zu bearbeitenden Leiterbahnen entstehen (vgl. auch US 6,281,471). Da es bei der Materialbearbeitung auch zur Temperaturänderung des Bearbeitungsobjektes kommt, wodurch sich die Absorptionsspektren der einzelnen Materialkomponenten verschieben, ist die Wirkung des erfindungsgemäßen Verfahrens besonders vorteilhaft, weil ansonsten mit Verschiebung der besagten Absorptionsspektren der Verbundmaterialien eine Beeinträchtigung der Materialselektivität gegeben wäre. Dies könnte ebenfalls Bearbeitungsfehler und Schäden am Bearbeitungsobjekt zur Folge haben.

Die Vorrichtung enthält einen Femtosekundenlaser 7, der über eine Laserverstärkerstufe 8 mit einem amplitudenmodulierenden Pulsformer 9 in Verbindung steht, dessen Steuereingang zur Amplitudenmodulierung an den Ausgang einer Steuereinheit 10 angeschlossen ist. Die Laserimpulse des Femtosekundenlasers 7 gelangen nach Verstärkung und nach Modulierung ihrer spektralen Amplitude auf ein achromatisches Objektiv 11, welches den Laserstrahl auf einen Wechselwirkungsbereich 12 mit einem Bearbeitungsobjekt 13 lenkt. Das Bearbeitungsobjekt 13 ist auf einem Koordinatentisch 14 angeordnet, der eine Positionierung des Bearbeitungsobjektes 13 in drei Raumrichtungen erlaubt. Der amplitudenmodulierende Pulsformer 9 kann beispielsweise durch eine optische Anordnung gemäß US 4,655,547 realisiert werden, welche eine räumliche Separation der spektralen Komponenten des Laserstrahls mittels eines Beugungsgitters und eine nachfolgende Abbildung des Spektrums in eine Fourierebene mittels einer Linse beinhaltet. Eine in dieser Fourierebene angeordnete polarisationsrotierende, streifenförmige Flüssigkristallmatrix (twisted nematic liquid crystal matrix) dient als räumlicher Lichtmodulator und bewirkt eine Veränderung des Polarisationszustandes der die einzelnen Streifen durchsetzenden spektralen Komponenten. Ein nachfolgender Polarisator (Analysator) dient in der besagten Patentschrift zur Übertragung der auf diese Weise erzielten Änderung des Polarisationszustands der einzelnen spektralen Komponenten in die gewünschte spektrale Amplitudenmodulation. Eine weitere Linse und ein weiteres dispersives Element mit den gleichen Parametern der entsprechenden Eingangskomponenten bewirken eine Rücktransformation des räumlich separierten Spektrums in den Laserstrahl (Kollimation).

Bei geeigneter Wahl der Parameter für die Impulsformung lässt sich eine Materialselektivität durch die Anpassung der spektralen Amplitude der Laserimpulse an das Absorptionsspektrum der zu bearbeitenden Materialkomponente erzielen, um benachbarte Zonen anderen Materials bei der Laserbearbeitung nicht zu schädigen. Darüber hinaus kann auch auf Temperaturveränderungen reagiert werden, die infolge der Materialbearbeitung entstehen und die Absorptionsspektren der Verbundmaterialien verschieben. In diesem Fall könnte (vgl. Fig. 1) am Bearbeitungsobjekt 13 ein Messfühler zur Temperaturerfassung angeordnet sein (aus Übersichtsgründen nicht in Fig. 2 dargestellt), der mit der Steuereinheit 10 in Verbindung steht. In diesem Fall würde der Impulsformer mit einer temperaturabhängigen Steuerung während der Lasermaterialbearbeitung eine dynamische Anpassung der spektralen Amplitude der Laserimpulse an die Absorptionscharakteristik des zu ablatierenden Materials erlauben, so dass Temperaturveränderungen im Bearbeitungsprozess nicht die Materialselektivität beeinträchtigen.

Die Realisierung der Erfindung ist nicht an die angegebenen Ausführungsbeispiele gebunden, fachmännische Weiterentwicklungen verlassen nicht den durch die Ansprüche definierten Schutzbereich.

### Aufstellung der verwendeten Bezugszeichen

- 1 -: Kurzpulslaser
- 2 -: Impulsformer
- 3 -: Bearbeitungseinheit
- 4 -: optischer Verstärker
- 5 -: Messeinrichtung
- 6, 10 -: Steuereinheit
- 7 -: Femtosekundenlaser
- 8 -: Laserverstärkerstufe
- 9 -: amplitudenmodulierender Pulsformer
- 11 -: achromatisches Objektiv
- 12 -: Wechselwirkungsbereich
- 13 -: Bearbeitungsobjekt
- 14 -: Koordinatentisch

## Patentansprüche

1. Verfahren zur Materialbearbeitung mit Laserpulsen großer spektraler Bandbreite und mit Pulslängen im Femto- und Pikosekundenbereich, bei welchem während eines Bearbeitungsprozesses die Laserpulse auf ein Bearbeitungsobjekt treffen oder in ein Bearbeitungsobjekt eindringen und auf oder in dem Bearbeitungsobjekt eine physikalische oder chemische Veränderung des Materials hervorrufen, **dadurch gekennzeichnet, dass** zum Erreichen definierter bearbeitungsspezifischer Effekte, wie die Erhöhung der Bearbeitungsgeschwindigkeit, die Verbesserung der Materialselektivität, die Verbesserung der Oberflächenstrukturierung, oder das Erzielen eines optischen Durchbruchs die spektrale Amplitude und/oder die spektrale Phase und/oder die spektrale Polarisation der Laserpulse vor und/oder während des Bearbeitungsprozesses gezielt verändert werden, wobei zumindest ein spektraler Parameter in Abhängigkeit einer Messgröße aus dem Bearbeitungsprozess vorzugsweise dynamisch verändert wird.

2. Verfahren gemäß Anspruch 1, **dadurch gekennzeichnet, dass** als Messgröße die Abtragsrate der Materialbearbeitung dient.

3. Verfahren gemäß Anspruch 1, **dadurch gekennzeichnet, dass** als Messgröße die Oberflächenrauhigkeit dient.

4. Verfahren gemäß Anspruch 1, **dadurch gekennzeichnet, dass** insbesondere bei der Erzeugung oder Bearbeitung eines optischen Wellenleiters die Transmission des Bearbeitungsobjektes als Messgröße verwendet wird.

5. Verfahren gemäß Anspruch 1, **dadurch gekennzeichnet, dass** insbesondere bei der Erzeugung oder Bearbeitung eines optischen Wellenleiters die Reflexion elektromagnetischer Wellen als Messgröße verwendet wird.

6. Verfahren gemäß Anspruch 1, **dadurch gekennzeichnet, dass** der vom Bearbeitungsbereich reflektierte Anteil des Laserlichts als Messgröße dient.

7. Verfahren gemäß Anspruch 1, **dadurch gekennzeichnet, dass** insbesondere bei der Herstellung oder Bearbeitung eines mikromechanischen Bauelements mindestens eine seiner Resonanzfrequenzen als Messgröße herangezogen wird.

8. Verfahren gemäß Anspruch 1, **dadurch gekennzeichnet, dass** insbesondere bei der Herstellung oder Bearbeitung eines mikromechanischen Bauelements eine Resonanzamplitude bei einer definierten Schwingungsfrequenz als Messgröße dient.

9. Verfahren gemäß Anspruch 1, **dadurch gekennzeichnet, dass** die Hydrophobizität bzw. die Hydrophilizität der Bearbeitungsoberfläche als Messgröße ausgewertet wird.

10. Verfahren gemäß Anspruch 1, **dadurch gekennzeichnet, dass** die Anisotropie des bearbeiteten Materials als Messgröße ausgewertet wird.

11. Verfahren gemäß Anspruch 1, **dadurch gekennzeichnet, dass** bei der Bearbeitung von Verbundwerkstoffen die Materialselektivität die Wechselwirkung der Laserpulse mit den Verbundwerkstoffen als Messgröße verwendet wird.

12. Verfahren gemäß Anspruch 1, **dadurch gekennzeichnet, dass** bei der Bearbeitung von mikroelektronischen Bauelementen mindestens eine ihrer elektrischen Eigenschaften, wie Leitfähigkeit oder Kapazität, als Messgröße verwendet wird.

13. Verfahren gemäß Anspruch 1, **dadurch gekennzeichnet, dass** bei der Bearbeitung menschlichen Gewebes, insbesondere menschlichen Augengewebes, mindestens ein Plasmaparameter, wie der Energie-Schwellwert für den optischen Durchbruch, das Streulicht oder das Plasmaspektrum, als Messgröße verwendet wird.

14. Verfahren gemäß Anspruch 1, **dadurch gekennzeichnet**, das bei der Zwei-Photonen-Polymerisation photosensitiver Materialien, insbesondere eines flüssigen Resins, die Quanteneffizienz des Polymerisationsprozesses, optische, oder mechanische Eigenschaften des polymerisierten Materials als Messgröße verwendet werden.

15. Verfahren nach Anspruch 1, **dadurch gekennzeichnet, dass** die spektralen Parameter der Laserpulse zunächst in ihrer Wirkung auf den vorgesehenen Bearbeitungsvorgang getestet werden und dass anschließend die in Hinsicht auf die abgezielte Bearbeitungswirkung ausgewählten spektralen Parameter als Ausgangsgrößen für den Materialbearbeitungsprozess eingestellt werden.

16. Verfahren nach Anspruch 1, **dadurch gekennzeichnet, dass** die aus Erfahrungen oder Berechnungen bekannten spektralen Parameter der Laserpulse als Ausgangsgrößen für den Bearbeitungsprozess eingestellt werden.

17. Vorrichtung zur Durchführung des Verfahrens nach Anspruch 1, bei der ein Laser (1) zur Erzeugung von Laserpulsen großer spektraler Bandbreite und mit Pulslängen im Femto- und Pikosekundenbereich über einen Pulsformer (2) zur Einstellung bzw. Veränderung der spektralen Amplitude und/oder der spektralen Phase und/oder der spektralen Polarisation der Laserpulse mit einer Bearbeitungseinheit (3, 11) für die Laserpulsbehandlung eines Bearbeitungsobjektes (13) in Verbindung steht, **dadurch gekennzeichnet, dass** eine Messeinrichtung (5) zur Überwachung des Bearbeitungsprozesses vorgesehen ist, welche über eine Steuereinheit (6, 10) mit dem Pulsformer (2) in Verbindung steht.

18. Vorrichtung nach Anspruch 17, **dadurch gekennzeichnet, dass** dem Pulsformer (2) mindestens eine Verstärkerstufe (4, 8) zur Verstärkung der Laserpulse vor- und/oder nachgeschaltet ist.

19. Vorrichtung nach Anspruch 17, **dadurch gekennzeichnet, dass** die Messeinrichtung (5) mindestens eine Messeinrichtung zur Messung der optischen Materialeigenschaften, wie Streuung, Brechzahl oder Plasma-Emissionsspektrum hat.

20. Vorrichtung nach Anspruch 17, **dadurch gekennzeichnet, dass** die Messeinrichtung (5) mindestens einen Messwertaufnehmer zur Messung der Temperatur der Materialbearbeitung besitzt.

21. Vorrichtung nach Anspruch 17, **dadurch gekennzeichnet, dass** die Messeinrichtung (5) mindestens einen Messwertaufnehmer zur Messung der Oberflächenrauhigkeit des Bearbeitungsobjektes (14) besitzt.

22. Vorrichtung nach Anspruch 17, **dadurch gekennzeichnet, dass** die Messeinrichtung (5) mindestens einen optischen Sensor aufweist.

23. Vorrichtung nach Anspruch 17, **dadurch gekennzeichnet, dass** sie zur Bearbeitung menschlichen Augengewebes geeignet ist.

24. Vorrichtung nach Anspruch 17, **dadurch gekennzeichnet, dass** sie einen spektralen Phasenmodulator beinhaltet, der auf der Verwendung eines mikro-elektro-mechanischen Systems (MEMS) basiert.

## Claims

1. Method for processing material using laser pulses with a large spectral bandwidth and with pulse lengths in the femtosecond and picosecond range, in which, during a processing process, the laser pulses impinge upon a processing object or penetrate into a processing object and cause a physical or chemical change in the material on or in the processing object, **characterized in that**, in order to achieve defined processing-specific effects, such as an increase in the processing speed, an improvement in the material selectivity, an improvement in the surface structuring or obtaining an optical breakdown, the spectral amplitude and/or the spectral phase and/or the spectral polarization of the laser pulses are modified in a targeted fashion before and/or during the processing process, wherein at least one spectral parameter is modified, preferably dynamically, depending on a measurement variable from the processing process.

2. Method according to Claim 1, **characterized in that** the removal rate of the material processing serves as measurement variable.

3. Method according to Claim 1, **characterized in that** the surface roughness serves as measurement variable.

4. Method according to Claim 1, **characterized in that**, particularly when producing or processing an optical waveguide, the transmission of the processing object is used as measurement variable.

5. Method according to Claim 1, **characterized in that**, particularly when producing or processing an optical waveguide, the reflection of electromagnetic waves is used as measurement variable.

6. Method according to Claim 1, **characterized in that** the portion of the laser light reflected by the processing region serves as measurement variable.

7. Method according to Claim 1, **characterized in that**, particularly when producing or processing a micromechanical component, at least one of the resonant frequencies thereof are used as measurement variable.

8. Method according to Claim 1, **characterized in that**, particularly when producing or processing a micromechanical component, a resonant amplitude at a defined vibration frequency serves as measurement variable.

9. Method according to Claim 1, **characterized in that** the hydrophobicity or the hydrophilicity of the processing surface is evaluated as measurement variable.

10. Method according to Claim 1, **characterized in that** the anisotropy of the processed material is evaluated as measurement variable.

11. Method according to Claim 1, **characterized in that**, when processing composite materials, the material selectivity the interaction of the laser pulses with the composite materials is used as measurement variable.

12. Method according to Claim 1, **characterized in that**, when processing microelectronic components, at least one of the electric properties thereof, such as conductivity or capacitance, is used as measurement variable.

13. Method according to Claim 1, **characterized in that**, when processing human tissue, in particular human eye tissue, at least one plasma parameter, such as the energy threshold for the optical breakdown, the stray light or the plasma spectrum, is used as measurement variable.

14. Method according to Claim 1, **characterized in that**, in the two-photon polymerization of photosensitive materials, in particular a liquid resin, the quantum efficiency of the polymerization process, optical properties or mechanical properties of the polymerized material are used as measurement variable.

15. Method according to Claim 1, **characterized in that** the spectral parameters of the laser pulses are initially tested in respect of their effect on the envisaged processing process and **in that**, subsequently, the spectral parameters selected in view of the sought-after processing effect are set as output variables for the material processing process.

16. Method according to Claim 1, **characterized in that** the spectral parameters of the laser pulses, known from experience or calculations, are set as output variables for the processing process.

17. Device for carrying out the method according to Claim 1, in which, for generating laser pulses with a large spectral bandwidth and with pulse lengths in the femtosecond and picosecond range, a laser (1) is connected to a processing unit (3, 11) for the laser pulse treatment of a processing object (13) via a pulse shaper (2) for setting or modifying the spectral amplitude and/or the spectral phase and/or the spectral polarization of the laser pulses, **characterized in that** a measuring apparatus (5) is provided for monitoring the processing process, which measuring apparatus (5) is connected to the pulse shaper (2) via a control unit (6, 10).

18. Device according to Claim 17, **characterized in that** at least one amplifier stage (4, 8) for amplifying the laser pulses is arranged upstream and/or downstream of the pulse shaper (2).

19. Device according to Claim 17, **characterized in that** the measuring apparatus (5) has at least one measuring apparatus for measuring the optical material properties such as scattering, refractive index or plasma emission spectrum.

20. Device according to Claim 17, **characterized in that** the measuring apparatus (5) features at least one measurement value pickup for measuring the temperature of the material processing.

21. Device according to Claim 17, **characterized in that** the measuring apparatus (5) features at least one measurement value pickup for measuring the surface roughness of the processing object (14).

22. Device according to Claim 17, **characterized in that** the measuring apparatus (5) has at least one optical sensor.

23. Device according to Claim 17, **characterized in that** it is suitable for processing human eye tissue.

24. Device according to Claim 17, **characterized in that** it contains a spectral phase modulator, which is based on the use of a micro-electromechanical system (MEMS).

## Revendications

1. Procédé d'usinage de matériau avec des impulsions laser à grande largeur de bande spectrale et avec des longueurs d'impulsions dans la bande des femto- et des picosecondes, procédé selon lequel, pendant un processus d'usinage, les impulsions laser viennent frapper un objet à usiner ou pénètrent dans un objet à usiner et provoquent une modification physique ou chimique du matériau sur ou dans l'objet à usiner, **caractérisé en ce que** pour atteindre des effets définis spécifiques à l'usinage, comme l'augmentation de la vitesse d'usinage, l'amélioration de la sélectivité du matériau, l'amélioration de la structuration de surface ou l'obtention d'une percée optique, l'amplitude spectrale et/ou la phase spectrale et/ou la polarisation spectrale des impulsions laser sont modifiées de manière ciblée avant et/ou pendant le processus d'usinage, au moins un paramètre spectral étant modifié de préférence de manière dynamique en fonction d'une grandeur de mesure issue du processus d'usinage.

2. Procédé selon la revendication 1, **caractérisé en ce que** la grandeur de mesure utilisée est le taux d'enlèvement de matière de l'usinage de matériau.

3. Procédé selon la revendication 1, **caractérisé en ce que** la grandeur de mesure utilisée est la rugosité de surface.

4. Procédé selon la revendication 1, **caractérisé en ce que** la transmission de l'objet à usiner est utilisée comme grandeur de mesure, notamment dans le cas de la production ou de l'usinage d'un guide d'onde optique.

5. Procédé selon la revendication 1, **caractérisé en ce que** la réflexion des ondes électromagnétiques est utilisée comme grandeur de mesure, notamment dans le cas de la production ou de l'usinage d'un guide d'onde optique.

6. Procédé selon la revendication 1, **caractérisé en ce que** la part de lumière laser qui est réfléchie par la zone d'usinage fait office de grandeur de mesure.

7. Procédé selon la revendication 1, **caractérisé en ce que** notamment dans le cas de la production ou de l'usinage d'un composant micromécanique, au moins l'une de ses fréquences de résonance est utilisée comme grandeur de mesure.

8. Procédé selon la revendication 1, **caractérisé en ce que** notamment dans le cas de la production ou de l'usinage d'un composant micromécanique, une amplitude de résonance à une fréquence d'oscillation définie est utilisée comme grandeur de mesure.

9. Procédé selon la revendication 1, **caractérisé en ce que** l'hydrophobicité ou l'hydrophilicité de la surface d'usinage est utilisée comme grandeur de mesure.

10. Procédé selon la revendication 1, **caractérisé en ce que** l'anisotropie du matériau usiné est utilisée comme grandeur de mesure.

11. Procédé selon la revendication 1, **caractérisé en ce que** lors de l'usinage de matériaux composites, la sélectivité du matériau l'interaction des impulsions laser avec les matériaux composites est utilisée comme grandeur de mesure.

12. Procédé selon la revendication 1, **caractérisé en ce que** lors de l'usinage de composants microélectroniques, au moins l'une de leurs propriétés électriques comme la conductivité ou la capacité est utilisée comme grandeur de mesure.

13. Procédé selon la revendication 1, **caractérisé en ce que** lors de l'usinage de tissus humains, notamment des tissus oculaires humains, au moins un paramètre de plasma comme la valeur de seuil d'énergie pour la percée optique, la lumière diffusée ou le spectre plasma est utilisé(e) comme grandeur de mesure.

14. Procédé selon la revendication 1, **caractérisé en ce que** dans le cas de matériaux photosensibles à polymérisation à deux photons, notamment d'une résine liquide, le rendement quantique du processus de polymérisation, les propriétés optiques ou les propriétés mécaniques du matériau polymérisé sont utilisés comme grandeur de mesure.

15. Procédé selon la revendication 1, **caractérisé en ce que** les paramètres spectraux des impulsions laser sont tout d'abord soumis à un test pour vérifier leur effet sur l'opération d'usinage prévue et **en ce qu'**ensuite, les paramètres spectraux sélectionnés du point de vue de l'effet d'usinage obtenu sont réglés comme grandeurs de sortie pour le processus d'usinage de matériau.

16. Procédé selon la revendication 1, **caractérisé en ce que** les paramètres spectraux des impulsions laser, connus par les expériences ou les calculs, sont réglés comme grandeurs de sortie pour le processus d'usinage.

17. Dispositif pour mettre en oeuvre le procédé selon la revendication 1, avec lequel un laser (1) destiné à générer des impulsions laser à grande largeur de bande spectrale et avec des longueurs d'impulsions dans la bande des femto- et des picosecondes est en liaison par le biais d'un façonneur d'impulsions (2) destiné à régler ou à modifier l'amplitude spectrale et/ou la phase spectrale et/ou la polarisation spectrale des impulsions laser avec une unité d'usinage (3, 11) pour le traitement aux impulsions laser d'un objet à usiner (13), **caractérisé en ce qu'**il est prévu un dispositif de mesure (5) destiné à surveiller le processus d'usinage, lequel est en liaison avec le façonneur d'impulsions (2) par le biais d'une unité de commande (6, 10).

18. Dispositif selon la revendication 17, **caractérisé en ce qu'**au moins un étage amplificateur (4, 8) destiné à amplifier les impulsions laser est branché en amont et/ou en aval du façonneur d'impulsions (2).

19. Dispositif selon la revendication 17, **caractérisé en ce que** le dispositif de mesure (5) possède au moins un dispositif de mesure pour mesurer les propriétés optiques du matériau comme la dispersion, l'indice de réfraction ou le spectre d'émission de plasma.

20. Dispositif selon la revendication 17, **caractérisé en ce que** le dispositif de mesure (5) possède au moins un enregistreur de valeur mesurée destiné à mesurer la température de l'usinage de matériau.

21. Dispositif selon la revendication 17, **caractérisé en ce que** le dispositif de mesure (5) possède au moins un enregistreur de valeur mesurée destiné à mesurer la rugosité de surface de l'objet à usiner (14).

22. Dispositif selon la revendication 17, **caractérisé en ce que** le dispositif de mesure (5) présente au moins un capteur optique.

23. Dispositif selon la revendication 17, **caractérisé en ce qu'**il convient pour l'usinage du tissu oculaire humain.

24. Dispositif selon la revendication 17, **caractérisé en ce qu'**il comporte un modulateur de phase spectral qui se base sur l'utilisation d'un microsystème électromécanique (MEMS).
